(19) Europäisches Patentamt
European Patent Office
Office européen des brevets

(11) Numéro de publication : **0 532 408 A1**

(12) **DEMANDE DE BREVET EUROPEEN**

(21) Numéro de dépôt : **92402455.7**

(22) Date de dépôt : **09.09.92**

(51) Int. Cl.[5] : **C08G 77/28,** H01B 1/12, G02F 1/153, H01M 10/40, // C03C4/18

(30) Priorité : **13.09.91 FR 9111349**
**28.04.92 FR 9205247**

(43) Date de publication de la demande :
**17.03.93 Bulletin 93/11**

(84) Etats contractants désignés :
**AT BE CH DE ES FR GB IT LI LU NL PT SE**

(71) Demandeur : **SAINT-GOBAIN VITRAGE INTERNATIONAL**
**"Les Miroirs" 18, avenue d'Alsace**
**F-92400 Courbevoie (FR)**

(72) Inventeur : **Armand, Michel**
**Route des Mésanges**
**F-38300 St Martin d'Uriage (FR)**
Inventeur : **Poinsignon, Christiane**
**34 Avenue Jean Perrot**
**F-38100 Grenoble (FR)**
Inventeur : **Sanchez, Jean-Yves**
**7 Chemin de Chartreuse, Le Chaboud**
**F-38330 St Ismier (FR)**
Inventeur : **de Zea Bermudez, Véronica**
**5 Rue du Lt Chanaron**
**F-38000 Grenoble (FR)**

(74) Mandataire : **Muller, René et al**
**SAINT-GOBAIN RECHERCHE 39, quai Lucien Lefranc-BP 135**
**F-93303 Aubervilliers Cédex (FR)**

(54) **Polymère conducteur protonique, application en tant qu'électrolyte dans des dispositifs électrochimiques.**

(57) L'invention a pour objet un polymère organo-minéral conducteur protonique basique, obtenu par copolymérisation de trois précurseurs :

— un précurseur à base d'un trialkoxysilane sur lequel est greffé un groupement méthanesulfonamide par l'intermédiaire d'un chaînon alkyle ou aryle,

— un précurseur "déprotonant" à base d'un trialkoxysilane sur lequel est greffé un groupement dérivé d'une base azotée, de préférence un groupement imidazoline, par l'intermédiaire d'un chaînon alkyle ou aryle,

— un précurseur "plastifiant" et solvatant présentant au moins un groupement urée, produit d'une réaction entre une mono-, di- ou triamine primaire D et un trialkoxysilane E sur lequel est greffé un groupement isocyanate par l'intermédiaire d'un chaînon alkyle.

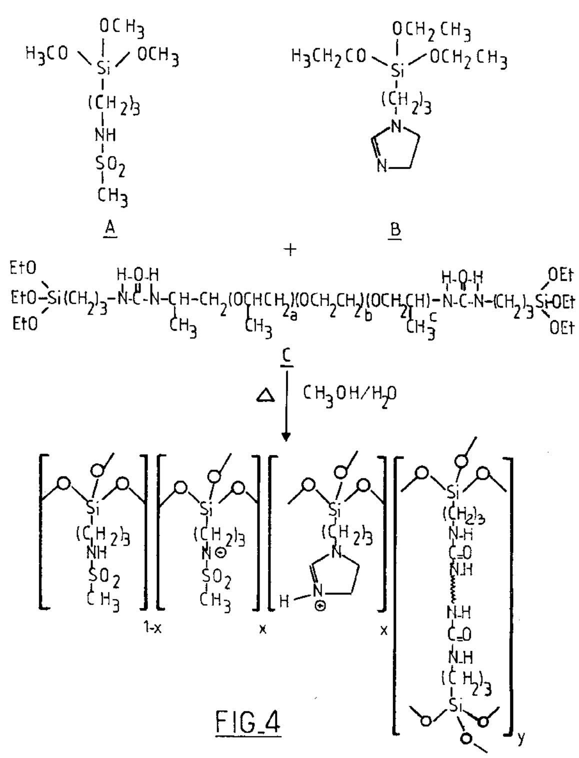

A
B
+
C
FIG_4

EP 0 532 408 A1

L'invention concerne des polymères conducteurs protoniques susceptibles d'être utilisés comme électrolytes dans des dispositifs électrochimiques.

L'invention vise plus précisément des polymères présentant une conductivité protonique et des caractéristiques mécaniques suffisantes pour les employer comme électrolytes dans des vitrages électrochromes, c'est-à-dire dans des vitrages dont la transmission lumineuse est modifiable sous l'action d'une différence de potentiel de par la présence d'une couche d'un matériau électrochrome, tel que des oxydes et/ou hydroxydes de tungstène, iridium, nickel ou titane, ayant la particularité de changer de coloration sous l'effet d'une insertion réversible de cations, et notamment de protons.

Ces polymères doivent pour ce faire répondre à différents critères, et notamment allier à une bonne capacité filmogène à la fois une compatibilité satisfaisante avec les couches adjacentes d'un système électrochrome et une adhérence suffisante à celles-ci.

C'est pourquoi, aussi bien pour des raisons de facilité de mise en oeuvre que pour obtenir une conductivité suffisamment élevée, il est nécessaire que ces polymères soient essentiellement amorphes - toute amorce de cristallinité étant très défavorable à la conductivité du matériau - et en outre présentent un caractère élastomère, caractère favorisant la mobilité des segments du réseau polymérique et par là même le transfert protonique.

Il est désormais bien connu de dissoudre dans une matrice de polymère organique présentant des hétéroatomes des acides forts, tels que l'acide sulfurique ou l'acide phosphorique, pour fabriquer ce type d'électrolyte protonique. Ces hétéroatomes peuvent être l'oxygène, comme dans le cas du polyoxyde d'éthylène (POE) ou l'azote, comme dans le cas de la polyéthylène imine linéaire (LPEI) ou branchée (BPEI). Leurs paires d'électrons libres permettent alors de solvater les protons des acides forts par les liaisons hydrogène. Le principe de la conductivité protonique de tels matériaux repose donc sur la présence d'un excès de protons au sein du polymère.

Une autre démarche a ensuite consisté à concevoir des polymères conducteurs protoniques qui présentent cette fois un caractère basique. Le principe consiste alors à créer, au sein du même type de polymère organique, précédemment utilisé comme solvatant d'acides forts, des lacunes - ou défauts - de protons, lacunes qui vont permettre le transfert des protons. Ce caractère basique est un atout considérable, dans la mesure où ces polymères offrent une meilleure compatibilité avec les couches adjacentes dans un système électrochrome, qui constituent les couches à propriété électrochrome généralement à base d'oxydes et d'hydroxydes.

Il a été ainsi étudié dans cette voie (V. de Zea Bermudez, M. Armand, C. Poinsignon, L. Abello, J.Y Sanchez in "Proceedings of the 3rd International Symposium in Polymer Electrolytes", Annecy, France, Juin 1991) une solution solide à base de polyoxyde d'éthylène et de sulfonamide $(POE)_n$-$NH_2SO_2NH_2$ avec en outre un agent qualifié de "dopant" ou "déprotonant", dans ce cas la guanidine introduite sous forme de carbonate de guanidine.

En l'absence de guanidine, la conductivité repose sur la capacité à l'auto-dissociation de la sulfonamide suivant l'équilibre :

$$2\ NH_2\text{-}SO_2\text{-}NH_2 \text{ <----> } NH_2\text{-}SO_2\text{-}NH_3^{+} + NH_2\text{-}SO_2\text{-}NH^{-}$$

La conductivité augmente par addition de la guanadine qui arrache des protons supplémentaires en créant des lacunes sur le groupement sulfonamide, constituant ainsi l'électrolyte conducteur protonique et à caractère basique.

Cependant, un obstacle auquel on se heurte alors, et qui est inhérent au choix d'un complexe de POE linéaire, est la cristallinité à température ambiante des complexes $POE/NH_2\text{-}SO_2\text{-}NH_2$, mis en évidence par analyse thermique. Le diagramme de phases permet ainsi de caractériser plusieurs composés cristallins.

Les auteurs de l'invention se sont donnés pour but un nouveau type de polymère conducteur protonique à caractère basique qui remédie à cet inconvénient, en gardant un type de conductivité analogue mais en changeant radicalement de type de réseau polymérique.

L'invention est donc un polymère conducteur protonique basique qui est le résultat de la copolymérisation de au moins trois types de précurseurs A, B et C.

Le premier précurseur A est à base d'un trialkoxysilane sur lequel on a greffé, par l'intermédiaire d'un chaînon alkyle ou aryle, un groupement méthanesulfonamide ($NHSO_2CH_3$) assez proche chimiquement de la sulfonamide précédemment mentionnée. C'est ce précurseur qui va conférer au polymère final sa conductivité protonique.

Le second précurseur B est à base d'un trialkoxysilane sur lequel est greffé, par l'intermédiaire d'un chaînon alkyle ou aryle, un groupement azoté basique, de préférence un groupement imidazoline. Il a pour rôle de "déprotoner" partiellement les groupements méthanesulfonamide apportés par le précurseur A, tout comme le ferait une base, afin d'assurer la conductivité protonique du polymère basique final par l'intermédiaire des lacunes ainsi créées.

Le troisième précurseur C est un "plastifiant" à propriété solvatante qui présente au moins une fonction

urée, il est le produit de la réaction entre une mono-, di-, ou triamine primaire D et un trialkoxysilane E sur lequel est greffé un groupement isocyanate par l'intermédiaire d'un chaînon alkyl. Il a pour fonction de plastifier le polymère final afin que celui-ci présente un caractère à la fois amorphe et plastique, trait indispensable à une bonne conductivité et une mise en oeuvre possible comme électrolyte dans un système électrochrome. Sa présence permet notamment de remédier à la rigidité supplémentaire induite par la présence du précurseur B.

On obtient finalement un polymère organo-minéral présentant un squelette silicaté modifié par différents groupements fonctionnels organiques, le squelette minéral de silice apportant à la fois une bonne résistance mécanique et une remarquable stabilité thermique, tandis que les "greffons" organiques permettent d'atteindre le caractère élastomère ainsi que la conductivité protonique requise. Le réseau polymérique obtenu utilise des points de réticulation constitués par des liaisons Si-O-Si-C, liaisons qui permettent de combiner les liaisons covalentes Si-C et Si-O-Si dont les propriétés remarquables ont déjà été largement explorées dans les structures des silicones.

En outre, le caractère basique de ce polymère, notamment conféré par la présence du précurseur B, permet de l'utiliser avec profit en tant qu'électrolyte dans des systèmes électrochromes. En effet, beaucoup de matériaux électrochromes (qui sont en contact direct avec l'électrolyte dans le système électrochrome) présentent des domaines de stabilité de pH, en fonctionnement normal, compris entre 4 et 12. C'est le cas des oxydes et/ou hydroxydes de nickel, titane ou iridium notamment. Ces matériaux électrochromes sont plus compatibles avec l'électrolyte si celui-ci présente un certain caractère basique. Le nouveau polymère selon l'invention ouvre donc le champ à de nouveau types de systèmes électrochromes.

De préférence, les chaînons alkyl des précurseurs A, B et du réactif E sont des chaînons linéaires comprenant de 1 à 4 atomes de carbone, et de préférence 3 atomes de carbone.

De même, les trialkoxysilanes des précurseurs A, B et du réactif E sont avantageusement des triéthoxysilanes ou de préférence des triméthoxysilanes, ces derniers permettant, de par leur encombrement stérique moindre, une réaction de copolymérisation plus efficace.

Quant à la diamine primaire D, on la choisit telle qu'elle répond à la formule chimique suivante :

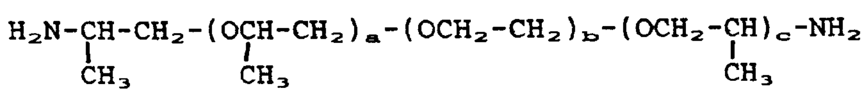

avec de préférence a + c ≧ 2,5 et b = 8,5, b = 15,5 ou b = 40,5.

On choisit la proportion adéquate de précurseur B "déprotonant" par rapport au précurseur A selon le degré de déprotonation final voulu. Avantageusement, on choisit x le pourcentage molaire de B par rapport à A compris entre 5 et 40 %, de préférence entre 10 et 20 %, et de préférence d'environ 15 %.

De même, on améliore les propriétés mécaniques du polymère en ajustant la quantité de précurseur C "plastifiant". Avantageusement, on choisit y le pourcentage molaire de C par rapport à A compris entre 5 et 40 %, de préférence entre 5 et 30 %, et de notamment d'environ 20 % ou 10 %.

Le mode d'obtention du polymère final est une synthèse par une technique appelée usuellement "sol-gel", qui permet ainsi de modifier organiquement un réseau minéral dans des conditions expérimentales peu exigeantes, notamment à basse température.

Cette technique permet de former des réseaux de grande pureté et de bonne homogénéité. Elle présente aussi l'avantage de permettre un bon contrôle des caractéristiques micro- et macrostructurales du polymère final.

Afin de préciser la portée et les avantages de l'invention, le mode d'obtention, l'analyse et les résultats de différents exemples de réalisation vont maintenant être décrits, à l'aide des figures qui représentent :

- en figure 1 : la réaction de synthèse (a) puis de polymérisation (b) du précurseur A,
- en figure 2 : la réaction de copolymérisation des précurseurs A et B,
- en figure 3 : la réaction de synthèse du précurseur C,
- en figure 4 : la réaction de copolymérisation de A, B et C,
- en figure 5 : un graphe précisant l'évolution de la conductivité en fonction de la température de deux types de précurseurs $C_1$ et $C_2$ polymérisés,
- en figures 6, 7 et 8: des graphes similaires concernant le produit de copolymérisation de A, B et $C_2$, en fonction de la température et de la proportion respective des trois composants.

On rappelle tout d'abord brièvement en quoi consiste une synthèse par voie "sol-gel". Elle met en jeu tout d'abord une étape de complexation : il s'agit de la préparation de la solution de l'alcoxyde métallique ou non métallique, $M(OR)_n$ avec M = Ti, Zr, Ge, Si, ... Les alcoxydes sont les précurseurs généralement employés car leur chimie est bien connue. Etant donné que dans la plupart des cas ils sont disponibles commercialement, cette étape n'est pas toujours nécessaire, ce qui est le cas dans le cadre de l'invention, utilisant des alcoxydes

de silicium. La seconde étape est une étape d'hydrolyxe. Il s'agit de la formation de l'hydroxyalcoxyde.

$$M(OR)_4 \overset{H_2O}{<\text{------}>} M(OR)_3OH$$

Il a été prouvé par marquage isotopique de l'oxygène de l'eau que c'est la fonction hydroxyle de l'eau qui se substitue au groupement alcoxyle.

L'étape suivant est l'étape de polymérisation à proprement dit. La première phase est une phase d'élimination d'alcool :

$$M(OR)_3\text{-}OR + HO\text{-}M(OR)_3 <\text{------}> (RO)_3M\text{-}O\text{-}M(OR)_3 + ROH$$

alcoolyse

La seconde est une phase d'élimination d'eau :

$$M(OR)_3\text{-}OH + HO\text{-}M(OR)_3 <\text{------}> (RO)_3M\text{-}O\text{-}M(OR)_3 + H_2O$$

hydrolyse

On achève la synthèse par une étape de séchage, réalisée à température ambiante ou avec un chauffage modéré, qui permet de déshydrater le produit final et en éliminer les solvants.

Les macro et microstructures et donc les propriétés physiques des matériaux dépendent des conditions expérimentales. Les paramètres importants qui fixent les vitesses d'hydrolyse, condensation et dépolymérisation sont notamment la nature du solvant, la température et le pH de la solution, l'ordre d'addition des réactifs, la vitesse d'addition de l'eau, le rapport M/eau, la nature du groupement R (diminution de la vitesse d'hydrolyse avec l'augmentation de la longueur de R) et la présence d'un catalyseur (acide ou basique).

Dans le cas présent, la réaction se déroule en milieu basique. C'est alors l'ion hydroxyle ou silanoate $SiO^-$ qui attaque directement le silicium. La réaction d'hydrolyse est rapide, la réaction de condensation est plus lente et les polymères obtenus sont très denses puisque la polymérisation est branchée.

La nature des groupements organiques du précurseur influence également le déroulement de la synthèse par voie "sol-gel", notamment du fait de l'encombrement stérique des groupes alkoxydes choisis, de leur réactivité, de la diminution du degré de réticulation du réseau minéral par blocage des liaisons de l'atome de silicium.

On précise que tous les précurseurs et réactifs de départ utilisés sont disponibles commercialement auprès des sociétés Hüls America Inc. et Petrarch Systemes Inc.

Un premier exemple de réalisation de l'invention utilisant la synthèse par voie "sol-gel" est illustré par la figure 1. Il concerne la synthèse du polymère methanesulfonamidosil de formule :

$$[SiO_{3/2}(CH_2)_3NHSO_2CH_3]_n$$

La figure 1-a précise la première étape : la synthèse du précurseur A. Lors de cette étape un alcoxyde modifié, le 3-aminopropyltrimethoxysilane est transformé en 3-méthanesulfonamidopropyltriméthoxysilane (A) par réaction avec du $CH_3SO_2Cl$ en milieu THF (tétrahydrofuranne), en présence d'un excès de l'ordre de 20 % par rapport au précurseur d'une résine échangeuse d'ions (AMBERLYST A-21 commercialisé par la société Janseen) et de pyridine à raison de 20 % molaire par rapport au précurseur. Après réaction complète (rendement d'environ 60 %), la solution est filtrée et rincée avec du THF.

La figure 1-b précise la deuxième étape : la polymérisation de A par voie "sol-gel".

Lors de cette deuxième étape, l'hydrolyse-condensation du précurseur A a lieu. Le rapport molaire utilisé est (1 précurseur A/4 $CH_3OH$/1,5 $H_2O$). Le méthanol et l'eau sont ajoutés sous agitation. Puis la solution est portée au reflux pendant une heure, et enfin coulée dans une plaque Pétri.

La dernière étape de séchage est un traitement thermique du produit obtenu à environ 50°C pendant plusieurs jours, puis à 80° pendant un court laps de temps. Le produit est finalement rincé au méthanol plusieurs fois pour en éliminer les impuretés.

Ce produit présente une conductivité protonique inférieure à $10^{-9}ohm^{-1}.cm^{-1}$, valeur nettement insuffisante pour pouvoir lui faire jouer un rôle d'électrolyte. En outre, bien qu'amorphe, il est particulièrement cassant.

C'est pourquoi un deuxième exemple de réalisation a consisté à ajouter un second précurseur B au précurseur A lors de l'étape de polymérisation. Par cette copolymérisation illustrée à la figure 2, le précurseur B, par sa fonction imidazoline, va créer des lacunes protoniques en arrachant des protons à l'azote de la fonction

méthanesulfonamide de A. Il agit donc en quelque sorte en tant que "dopant". Ce composé B est le 3-(2-imidazolin-1-yl)propyltriethoxysilane de formule $(H_3CH_2CO)_3Si(CH_2)_3(N_2C_3H_5)$ et présente un pKa de 13.

L'ordre d'addition des produits lors de la réaction est d'abord le méthanol, ensuite B, et en dernier l'eau. Celle-ci se déroule de manière analogue à l'exemple 1 et l'étape suivante de séchage est identique.

Le produit final obtenu présente néanmoins toujours une conductivité protonique faible et une mauvaise plasticité.

Afin d'obtenir les propriétés souhaitées, un troisième exemple, qui est l'objet de l'invention, a consisté à copolymériser à la fois les précurseurs A et B précédents et un troisième précurseur C dont le rôle est de plastifier le produit final, à la fois pour le rendre élastomère pour des raisons de mise en oeuvre et pour rendre les segments du réseau polymérique créé plus mobiles afin de faciliter le transfert protonique.

La figure 3 illustre la réaction de synthèse du précurseur C, fabriqué à partir d'un isocyanate E, qui est le 3-isocyanatopropyltriéthoxysilane, et d'une diamine primaire D, notamment celle commercialisée sous la dénomination Jeffamine ED-646 lorsque a + c = 2,5 et b = 8,5, celle commercialisée sous la dénomination Jeffamine ED-935,5 lorsque a + c ≧ 2,5 et b = 15,5 et celle commercialisée sous la dénomination Jeffamine ED-2000 lorsque a + c ≧ 2,5 et b = 40,5. La synthèse est faite par addition lente de l'isocyanate E à la diamine D en milieu THF. On obtient alors le précurseur C, du type urée pontante triéthoxyxilane.

La figure 4 illustre l'étape suivante de copolymérisation de A, B et C. Toujours les mêmes conditions opératoires sont utilisées. L'ordre d'addition des réactifs est le suivant : d'abord le méthanol, ensuite le précurseur à fonction plastifiante C puis le "déprotonant" B et finalement l'eau.

On sèche le produit obtenu comme précédemment.

En figure 5, un graphe indique en fonction de la température la conductivité d'un polymère obtenu par polymérisation du seul plastifiant $C_1$ synthétisé à partir de la Jeffamine ED-646 et du réactif E ainsi que du polymère obtenu par polymérisation du seul plastifiant $C_2$ synthétisé à partir de la Jeffamine ED-935,5 et du même réactif E. On voit clairement que le polymère à partir de $C_2$ permet d'atteindre de meilleures conductivités que le polymère à partir de $C_1$.

En figures 6, 7 et 8, les graphes permettent de préciser l'évolution de la conductivité des polymères $P_{1-7}$ obtenus par polymérisation de A, B et $C_2$ précédemment défini, à la fois en fonction de la température comme précédemment et en fonction de la proportion relative des trois composants de départ.

Ces proportions relatives sont récapitulées dans le tableau ci-dessous, sachant que x est le pourcentage molaire de B par rapport à A et y le pourcentage molaire de $C_2$ par rapport à A.

| | x (%) | y (%) |
|---|---|---|
| $P_1$ | 15 | 20 |
| $P_2$ | 20 | 20 |
| $P_3$ | - | 100 |
| $P_4$ | 15 | 10 |
| $P_5$ | 15 | 30 |
| $P_6$ | 10 | 10 |
| $P_7$ | 20 | 10 |

($P_3$ concerne uniquement le polymère obtenu à partir du plastifiant $C_2$ seul).

On constate alors que l'on peut optimiser la conductivité protonique de chaque polymère selon l'invention en ajustant le facteur x, qui correspond au pourcentage de déprotonation, et/ou le facteur y qui correspond au pourcentage de plastification.

Ainsi, si l'on compare les conductivités, à la figure 8, des produits $P_6$, $P_4$ et $P_7$ qui ont tous un degré de plastification y constant et des pourcentages de déprotonation x variables, on constate que dans ce cas ce sont des valeurs de x de 10 à 15 % qui conduisent aux conductivités les plus élevées.

Si par ailleurs on compare les conductivités, à la figure 7, des produits $P_1$, $P_4$, $P_5$ qui ont tous un même pourcentage de déprotonation x et un degré de plastification y variable, on constate qu'augmenter le degré de plastification jusqu'à 30 % n'améliore pas la conductivité de manière notable, et est plutôt défavorable vers les températures les plus hautes ; les conductivités de ces trois produits étant par contre peu différentes vers 30°C, 1000/T (°K) ≈ 3,30.

Le choix spécifique du plastifiant est également prépondérant : ainsi, si l'on synthétise un polymère selon l'invention à partir de A, B et $C_3$, $C_3$ étant la Jeffamine ED-2000 déjà décrite, on obtient pour une valeur de x

de 15 % et de y de 10 %, une conductivité de $2.10^{-7}\ \Omega^{-1}.cm^{-1}$ à 30°C et une conductivité de $10^{-5}\ \Omega^{-1}.cm^{-1}$ à 84°C. Ainsi, pour ces valeurs de x et y données, c'est avec un plastifiant de chaîne plus longue, donc de masse molaire plus élevée que l'on obtient les conductivités les plus élevées.

Il est à noter, en outre, que tous les polymères de l'invention présentent un caractère amorphe et plastique, qu'ils sont stables thermiquement jusqu'à 220°C et que leur gamme de stabilité électrochimique peut être considérée comme proche de 2 volts.

En conclusion, les auteurs de l'invention ont donc mis au point un produit à bonnes propriétés conductrices et mécaniques satisfaisantes, qui est un réseau partiellement organique et partiellement minéral, et pouvant être par exemple utilisé soit dans des systèmes électrochromes, soit dans d'autres dispositifs électrochimiques du type batteries.

Son avantage certain en tant qu'électrolyte amorphe dans un système électrochrome réside notamment dans le fait que son caractère nettement basique le rend compatible avec de nombreux matériaux électrochromes.

## Revendications

1. Polymère organo-minéral conducteur protonique basique, caractérisé en ce qu'il est le résultat d'une copolymérisation de au moins trois précurseurs :
   - un précurseur A à base d'un trialkoxysilane sur lequel est greffé un groupement méthanesulfonamide par l'intermédiaire d'un chaînon alkyle ou aryle,
   - un précurseur B "déprotonant" à base d'un trialkoxysilane sur lequel est greffé un groupement azoté basique, de préférence un groupement imidazoline, par l'intermédiaire d'un chaînon alkyle ou aryle,
   - un précurseur C "plastifiant" et solvatant présentant au moins un groupement urée, produit d'une réaction entre une mono-, di-, ou triamine primaire D et un trialkoxysilane E sur lequel est greffé un groupement isocyanate par l'intermédiaire d'un chaînon alkyle.

2. Polymère selon la revendication 1, caractérisé en ce que au moins un des chaînons alkyle permettant de greffer sur les trialkoxysilanes, respectivement un groupement méthanesulfonamide pour le précurseur A, un groupement azoté basique pour le précurseur B et un groupement isocyanate pour le réactif E, est un chaînon alkyle linéaire comportant de 1 à 4 atomes de carbone, et de préférence 3 atomes de carbone.

3. Polymère selon la revendication 2, caractérisé en ce que le trialkoxysilane du précurseur A, B ou du réactif E est un triméthoxysilane ou un triéthoxysilane.

4. Polymère selon l'une des revendications 1 à 3, caractérisé en ce que l'amine primaire D est une diamine qui répond à la formule générale :

   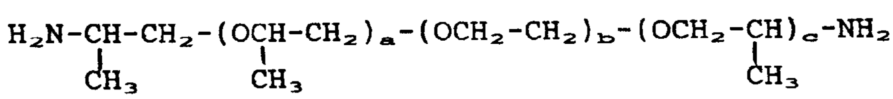

   avec a + c = 2,5 ou a + c ≧ 2,5 et b = 8,5 ; b = 15,5 ou b = 40,5.

5. Polymère selon l'une des revendications 1 à 4, caractérisé en ce que le pourcentage molaire x du précurseur B "déprotonant" par rapport au précurseur A est compris entre 5 et 40 %, de préférence entre 10 et 20 %, et de préférence d'environ 15 %.

6. Polymère selon l'une des revendications 1 à 5, caractérisé en ce que le pourcentage molaire y du précurseur C "plastifiant" par rapport au précurseur A est compris entre 5 et 40 %, de préférence entre 5 et 30 %, et notamment d'environ 10 ou 20 %.

7. Polymère selon l'une des revendications 1 à 6, caractérisé en ce qu'il est obtenu par une technique "sol-gel".

8. Application du polymère selon l'une des revendications 1 à 7 comme électrolyte dans des dispositifs électro-chimiques, notamment du type batteries et systèmes électrochromes.

9. Application du polymère selon l'une des revendications précédentes dans des systèmes électrochromes

employant des matériaux à propriété électrochrome dont le domaine de stabilité en fonctionnement normal est une gamme de pH comprise entre 4 et 12.

**10.** Application du polymère selon la revendication 9, caractérisé en ce que les matériaux à propriété électrochrome sont des oxydes et/ou hydroxydes d'iridium, titane ou nickel.

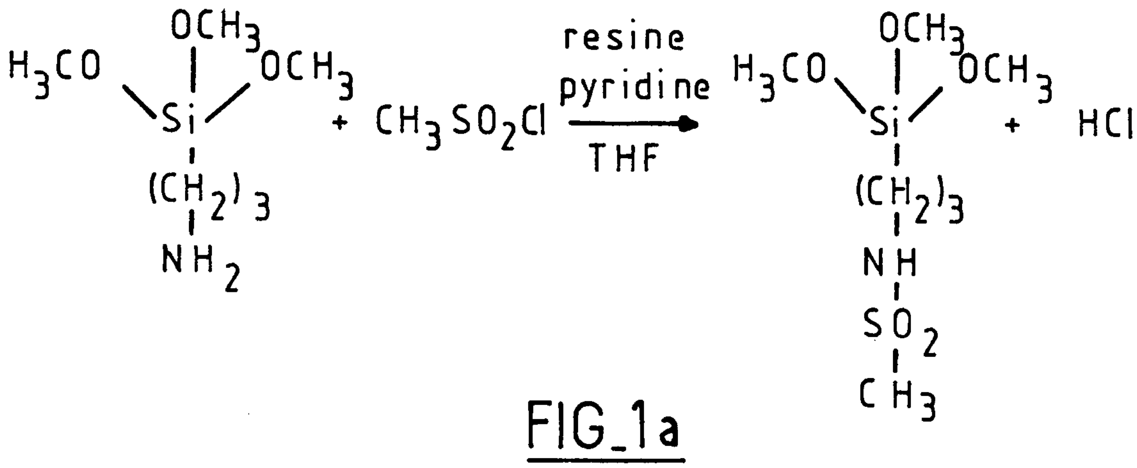


FIG_1a

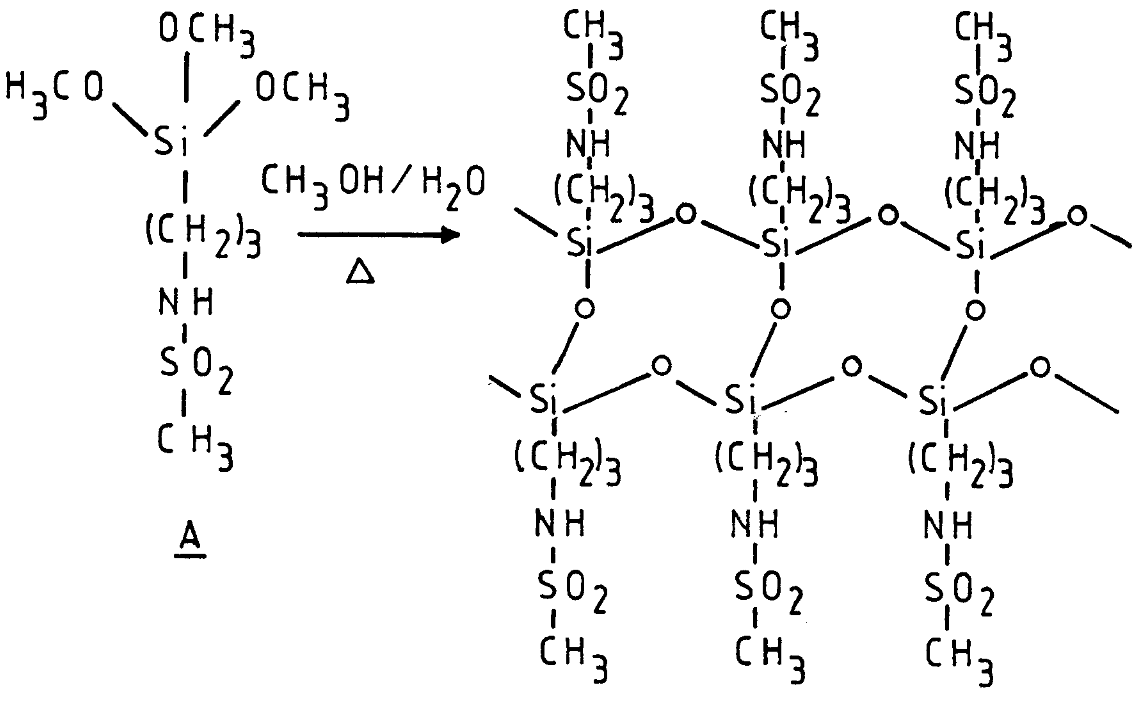


A

FIG.1b

FIG_1

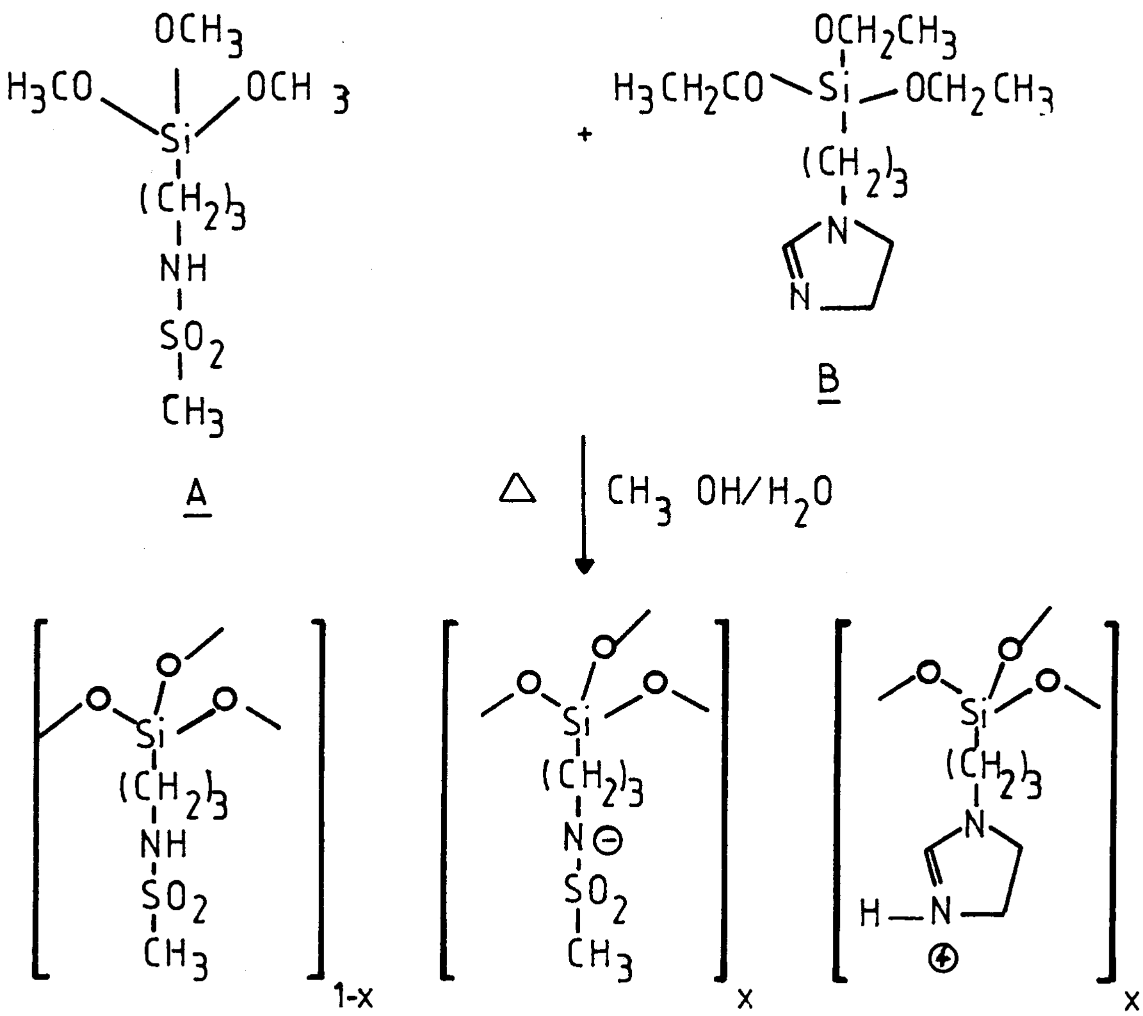


A

B

FIG.2

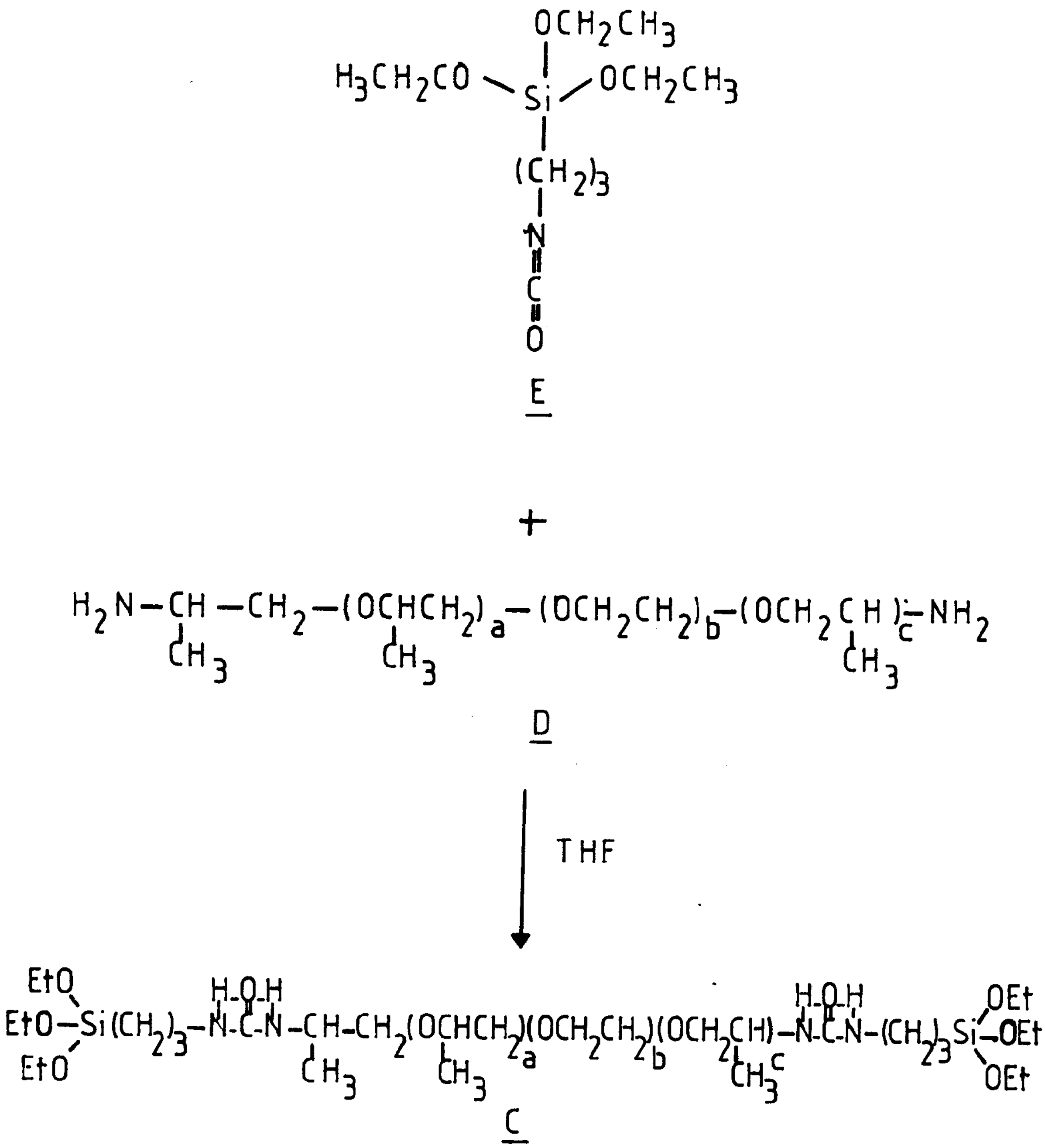


E

+

D

C

FIG_3

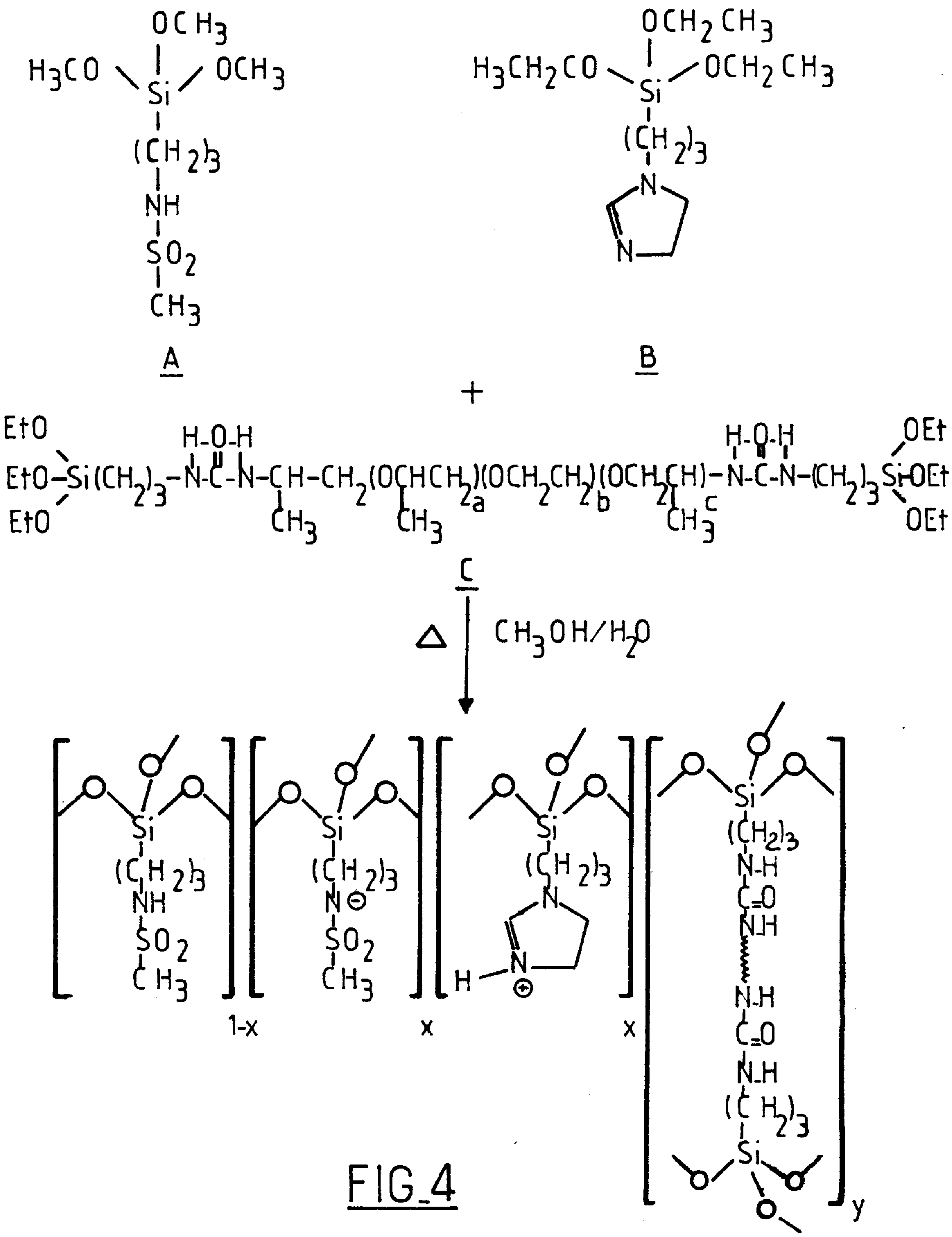


A

B

C

FIG_4

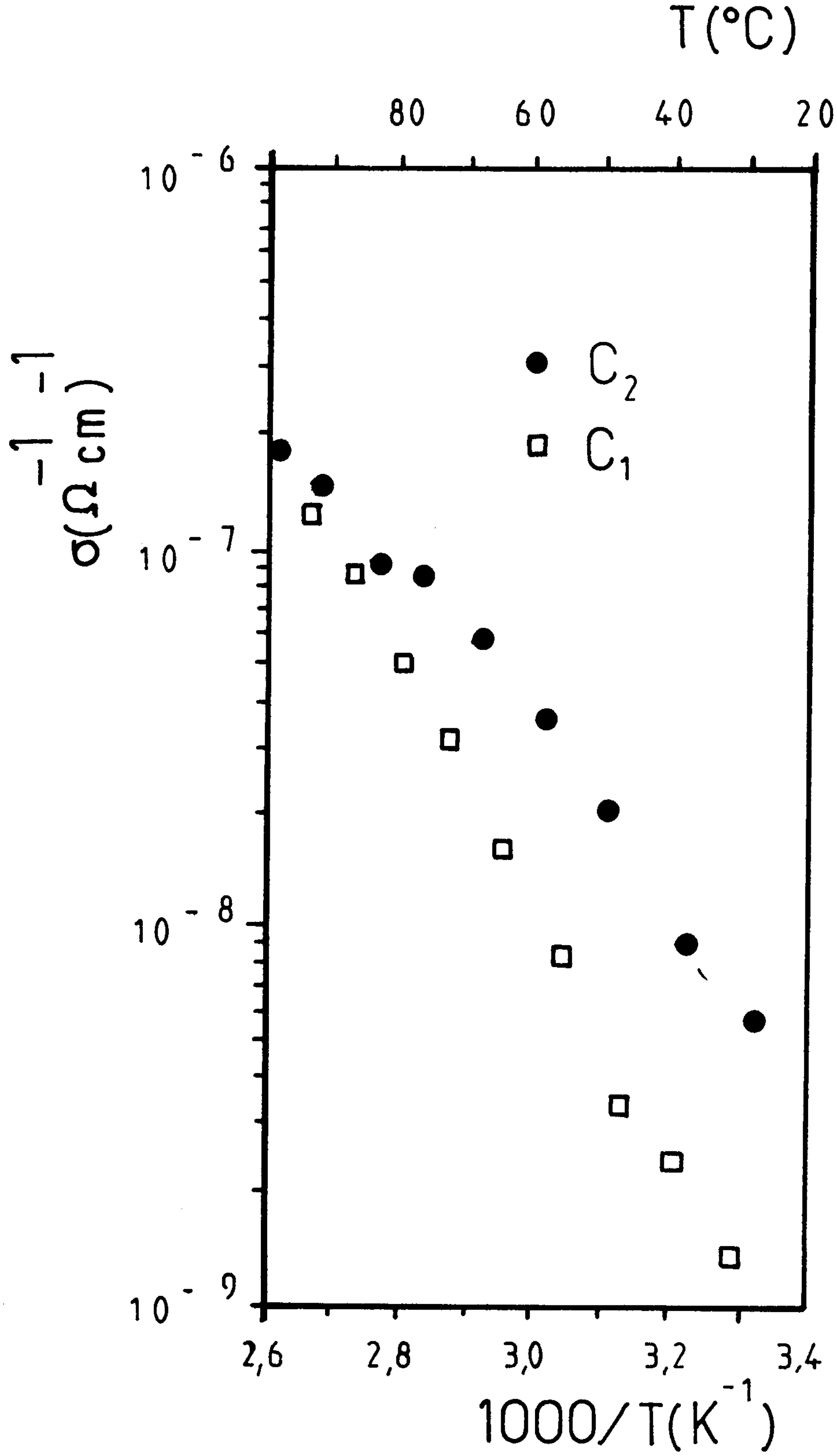
T(°C)
80
60
40
20
$10^{-6}$
$10^{-7}$
$10^{-8}$
$10^{-9}$
$\sigma(\Omega\, cm)^{-1}$
$C_2$
$C_1$
2,6
2,8
3,0
3,2
3,4
$1000/T(K^{-1})$

FIG_5

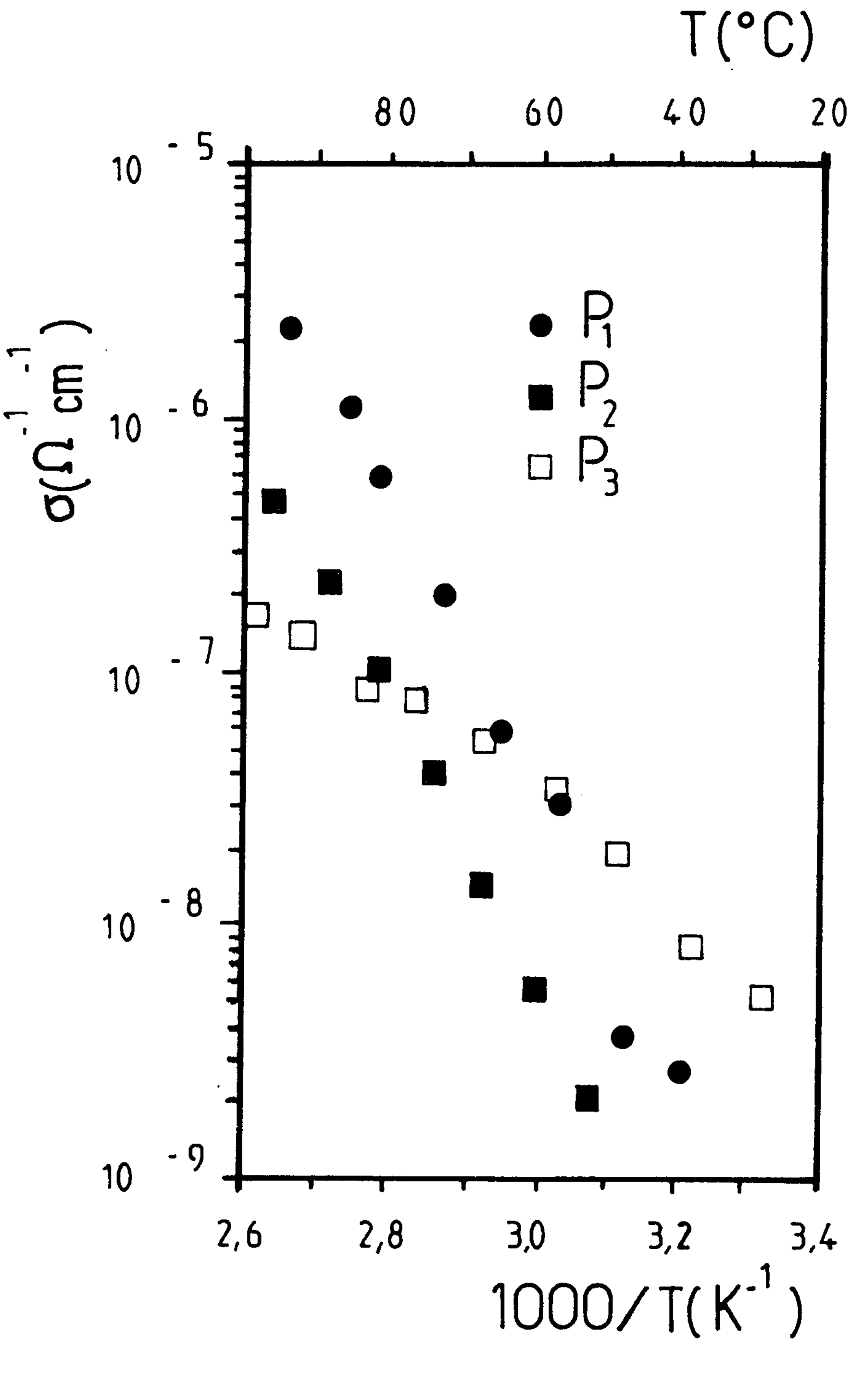
T(°C)
80
60
40
20
$10^{-5}$
$10^{-6}$
$10^{-7}$
$10^{-8}$
$10^{-9}$
$\sigma(\Omega^{-1}cm^{-1})$
$P_1$
$P_2$
$P_3$
2,6
2,8
3,0
3,2
3,4
$1000/T(K^{-1})$

FIG_6

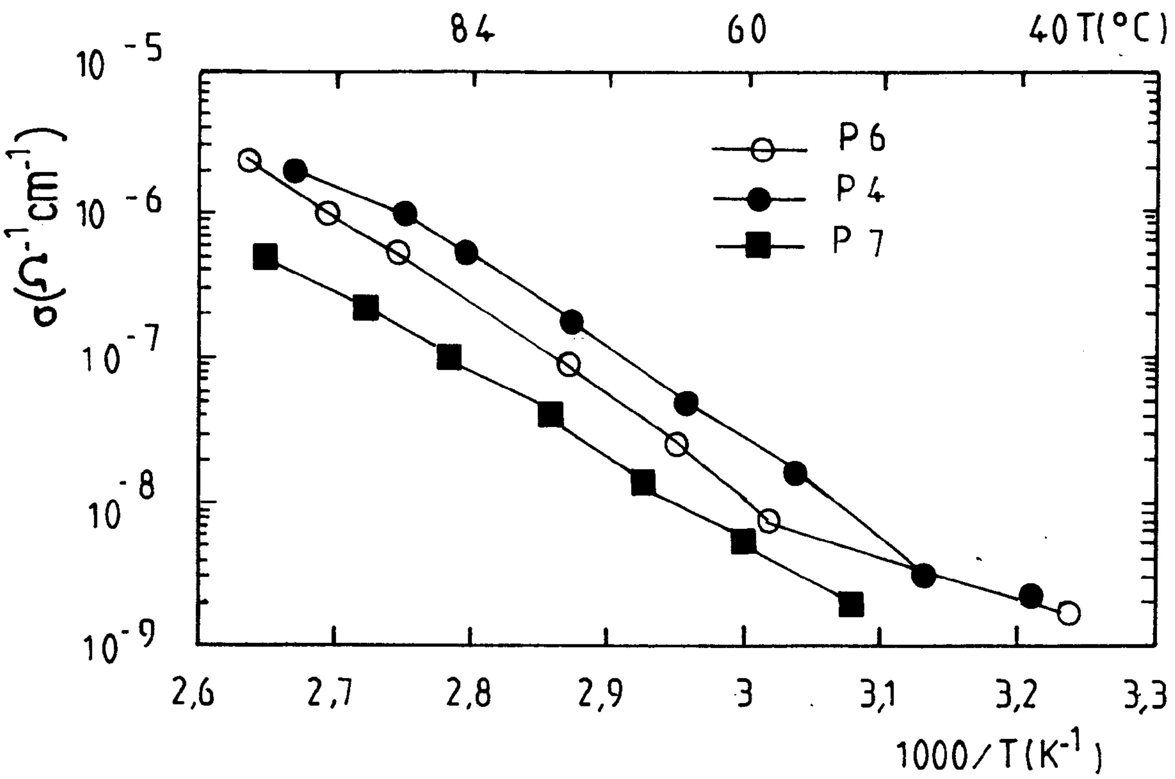
84
60
40 T(°C)
$10^{-5}$
$10^{-6}$
$10^{-7}$
$10^{-8}$
$10^{-9}$
σ(Ω⁻¹cm⁻¹)
P 6
P 4
P 7
2,6
2,7
2,8
2,9
3
3,1
3,2
3,3
1000/T(K⁻¹)

FIG_8

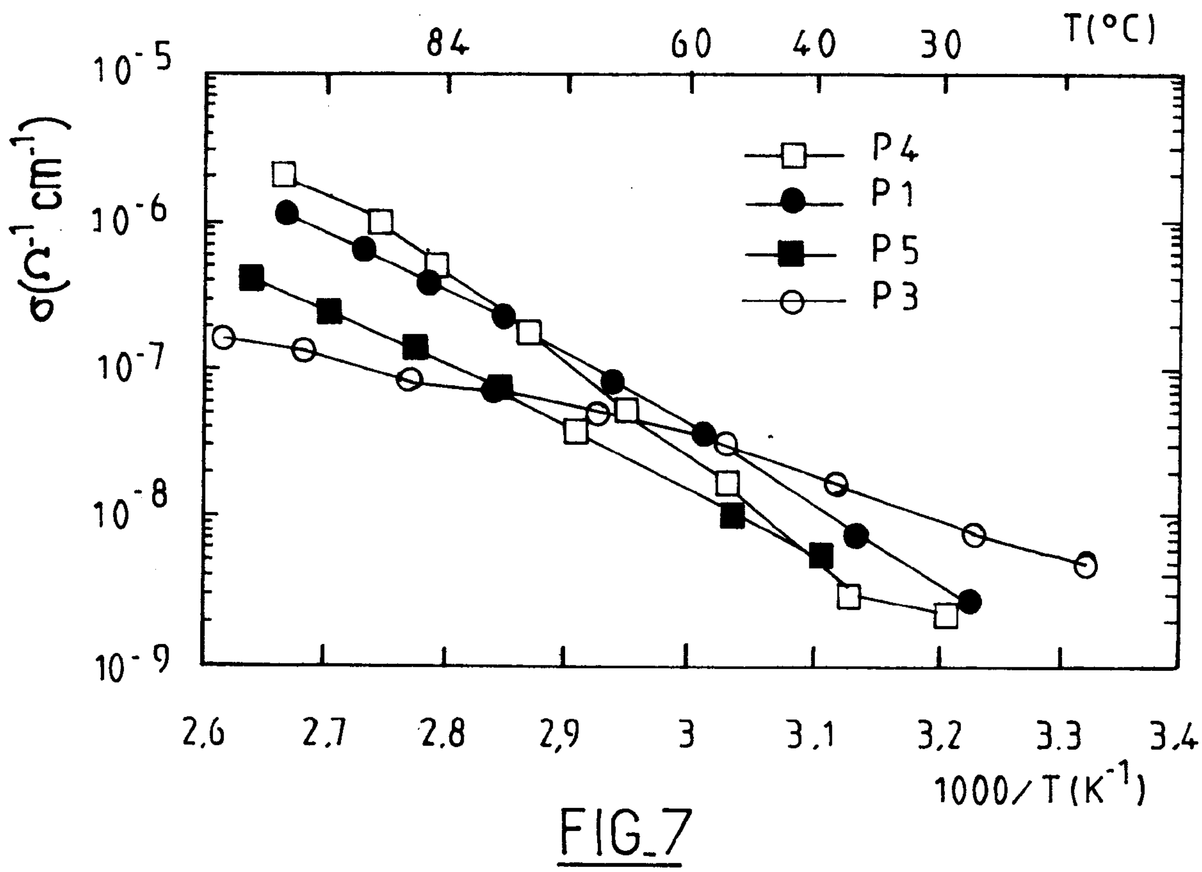
84
60
40
30
T(°C)
$10^{-5}$
$10^{-6}$
$10^{-7}$
$10^{-8}$
$10^{-9}$
σ(Ω⁻¹cm⁻¹)
P4
P1
P5
P3
2,6
2,7
2,8
2,9
3
3,1
3,2
3,3
3,4
1000/T(K⁻¹)

FIG_7

Office européen des brevets

# RAPPORT DE RECHERCHE EUROPEENNE

Numero de la demande
EP 92 40 2455

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5 ) |
| A | US-A-4 523 002 (J. R. CAMPBELL ET AL.)<br>* colonne 4, formule III; revendication 1 *<br>--- | 1,2 | C08G77/28<br>H01B1/12<br>G02F1/153<br>H01M10/40<br>//C03C4/18 |
| A | EP-A-0 404 698 (RHONE-POULENC)<br>* revendication 1 *<br>--- | 1,2,4 | |
| A | EP-A-0 372 584 (DOW CORNING)<br>* abrégé *<br>--- | 1,4,8 | |
| A | DATABASE WPIL<br>Week 8935,<br>Derwent Publications Ltd., London, GB;<br>AN 89-251855<br>& JP-A-1 182 325 (SAGAMI CHEM. RES. CENTRE) 20 Juillet 1989<br>* abrégé *<br>--- | 1,4,8,9 | |
| A | PATENT ABSTRACTS OF JAPAN<br>vol. 14, no. 168 (E-912)30 Mars 1990<br>& JP-A-20 24 976 ( HITACHI MAXELL ) 26 Janvier 1990<br>* abrégé *<br>----- | 1,4,7 | DOMAINES TECHNIQUES RECHERCHES (Int. Cl.5 )<br>C08G<br>G02F<br>H01M |

Le présent rapport a été établi pour toutes les revendications

| Lieu de la recherche | Date d'achèvement de la recherche | Examinateur |
|---|---|---|
| BERLIN | 30 NOVEMBRE 1992 | HOEPFNER W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
&: membre de la même famille, document correspondant

EPO FORM 1503 03.82 (P0402)